Europäisches Patentamt

European Patent Office

Office européen des brevets

(19)

(11) Numéro de publication: **0 190 085**
**B1**

(12)
# FASCICULE DE BREVET EUROPÉEN

(45) Date de publication du fascicule du brevet:
**19.04.89**

(21) Numéro de dépôt: **86420011.8**

(22) Date de dépôt: **09.01.86**

(51) Int. Cl.⁴: **C 04 B 28/02,** C 04 B 14/10 //
(C04B28/02, 14:10, 14:42)

(54) Matériau composite pour la construction à base de pouzzolanes et de fibres de verre, et procédés de fabrication.

(30) Priorité: **10.01.85 FR 8500474**

(43) Date de publication de la demande:
**06.08.86 Bulletin 86/32**

(45) Mention de la délivrance du brevet:
**19.04.89 Bulletin 89/16**

(84) Etats contractants désignés:
**AT BE CH DE FR GB IT LI LU NL SE**

(56) Documents cité:
**WO-A-81/00252**
**DE-A-3 315 357**
**FR-A-1 211 265**
**GB-A-530 797**
**GB-A-1 113 205**
**GB-A-1 588 938**
**US-A-2 815 293**

(73) Titulaire: **INSTITUT NATIONAL DES SCIENCES APPLIQUEES DE LYON (Etablissement public à caractère scientifique culturel et professionel), 20 avenue Albert Einstein, F-69100 Villeurbanne (FR)**

(72) Inventeur: **Ambroise, Jean, 235 boulevard Pinel, F-69500 Bron (FR)**
Inventeur: **Murat, Michel, 8B, rue Claude Baudrand, F-69300 Caluire (FR)**
Inventeur: **Pera, Jean, 16, rue Gervais Bussière, F-69100 Villeurbanne (FR)**

(74) Mandataire: **Laurent, Michel, Cabinet LAURENT et GUERRE B.P. 32, F-69131 Ecully Cédex (FR)**

EP 0 190 085 B1

LIBER, STOCKHOLM 1989

## Description

L'invention concerne un nouveau matériau composite pour la construction à base de pouzzolanes et de fibres de verre; elle concerne également des procédés pour la fabrication de ce matériau.

Depuis longtemps déjà, on a proposé de renforcer les ciments au moyen de fibres de verre, notamment pour la fabrication de panneaux de construction. Toutefois, si l'on mélange des fibres de verre à des ciments classiques, tels que par exemple le ciment portland (CPA), la chaux, libérée lors de l'hydratation, attaque ces fibres de verre et provoque rapidement leur corrosion. Pour pallier ces inconvénients, on a suggéré de remplacer les fibres de verre usuelles, notamment à usage textile définies sous l'appellation "fibres E" , par des fibres de verre résistant aux alcalis, telles que celles contenant une proportion appréciable de zircone. Ces fibres, qui résistent bien à la chaux, donnent de bons résultats lorsqu'elles sont mélangées au ciment, mais présentent toutefois l'inconvénient au plan industriel d'être très chères par rapport aux fibres de verre usuelles, de sorte que cette technique n'a pu être largement développée.

Dans les brevets DE-A-3 315 357, et FR-A-2 149 998 (correspondant connu US-A-3 852 082), on a suggéré d'ajouter à ces mélanges de fibres de verre résistant aux alcalis et de chaux, des pouzzolanes naturelles ou artificielles, c'est-à-dire:

- soit des pouzzolanes extraites du sol,
- soit des pouzzolanes issues de déchets industriels, tels que des cendres volantes, des laitiers de haut-fourneau ou des poussières de silice.

Comme précédemment, dans tous ces procédés, il est indispensable de faire appel à des fibres de verre résistant aux alcalis, notamment à des fibres à base de zircone. Cela rend ces procédés coûteux et conduit à des matériaux composites jugés trop souvent irréguliers, du fait notamment de l'origine des pouzzolanes mises en oeuvre

Dans le document GB-A-1 113 205, on a décrit un procédé dans lequel on mélange des fibres de verre, du ciment et des pouzzolanes actives issues de terres de diatomées. Ce mélange est durci par une résine epoxy et un agent gélifiant. Cette technique qui vise à améliorer la résistance des ciments ne s'est pas développée, car du fait même des constituants mis en oeuvre, elle est très coûteuse, notamment pour des productions de masse.

L'invention pallie ces inconvénients.

Elle vise tout d'abord un matériau composite du type en question, qui soit facile et économique à réaliser, et présente de bonnes qualités mécaniques.

Ce matériau composite pour la construction, constituée par un mélange de ciment générant de la chaux et de pouzzolanes, renforcé par des fibres de verre,
caractérisé:

- en ce que le mélange comprend au plus dix pourcent (10 %) de fibres de verre minérales non-métalliques, sensibles aux alcalis,
- et en ce que les pouzzolanes sont des pouzzolanes de synthèse métakaoliniques hydratées, obtenues par calcination de composés kaoliniques contenant au moins 40 % en poids de kaolin, choisis dans le groupe constitué par les argiles, les latérites et les sols tropicaux.

En d'autres termes, l'invention consiste tout d'abord à remplacer les pouzzolanes naturelles ou artificielles par une pouzzolane de synthèse spécifique, à savoir une pouzzolane obtenue à partir de composés minéraux naturels kaoliniques, c'est-à-dire riches en kaolinite. Cette substitution présente l'avantage totalement inattendu de permettre la mise en oeuvre de fibres de verre sensibles aux alcalis, alors que toutes les techniques de l'art antérieur nécessitaient de faire appel à des fibres de verre résistant aux alcalis. On ne pouvait donc pas prévoir que ce simple changement permettrait de mettre en oeuvre de telles fibres bon marché, puisque, comme déjà dit, l'art antérieur exigeait que l'on fasse appel exclusivement à des fibres insensibles aux alcalis, telles que des fibres à base de zircone, c'està-dire des fibres coûteuses. Il s'agit donc là d'une rupture et d'un préjugé vaincu.

Par "pouzzolanes de synthèse obtenues à partir de composés kaoliniques", on désigne des produits minéraux naturels à base de kaolin, tels que des argiles, des latérites, des sols tropicaux, riches en kaolinite, qui ont été calcinés à des températures comprises entre 650 et 850° C, de préférence entre 700 et 800° C, de manière à réaliser une activation thermique. Par "produits riches en kaolinites", il faut entendre des produits qui non seulement présentent au moins 40 % et de préférence 50 % en poids de kaolin, mais dans lesquels le solde est constitué essentiellement par de la silice et des oxydes de fer, à l'exclusion d'autres minéraux argileux.

Ces pouzzolanes de synthèse présentent des propriétés liantes en présence d'un activateur chimique, tel que par exemple la chaux et plus précisément l'hydroxyde de calcium.

Certes, on savait que l'addition de pouzzolanes naturelles ou artificielles à des ciments permettaient de consommer la chaux formée lors de l'hydratation. Mais il s'agissait là d'un phénomène lent pouvant durer un an ou plus. On ne pouvait donc pas prévoir que la substitution à ces pouzzolanes naturelles ou artificielles d'une pouzzolane de synthèse particulière, à savoir celle issue de produits riches en kaolinite, permettrait de consommer beaucoup plus rapidement la chaux formée, à savoir seulement en quelques jours, voire au plus en quelques semaines, et ce en fonction de la composition initiale du mélange: ciment + pouzzolanes de synthèse. Ainsi, grâce à cette réactivité élevée de la pouzzolane de synthèse spécifique utilisée, la chaux formée est consommée au fur et à mesure de sa formation, ce qui limite, voire annule, l'attaque chimique des fibres de renfort, dont on croyait qu'il fallait qu'elles soient nécessairement résistantes aux alcalis, ce qui rend alors possible l'emploi de fibres sensibles aux alcalis, donc bon marché.

De même, on a constaté que l'utilisation d'autres pouzzolanes de synthèse préparées à partir d'argiles autres que les argiles kaoliniques, ne permettaient pas d'obtenir économiquement un tel résultat.

Par "fibres de verre minérales non métalliques sensibles aux alcalis", on désigne des éléments filiformes, continus (filaments) ou discontinus (fibres), qui sont attaqués à température ambiante par les alcalis, notamment par de la chaux en solution, et qui sont obtenus par extrusion de verre fondu amorphe, c'est-à-dire d'un solide non cristallin n'ayant pas d'ordre à longue distance. Selon la composition du verre de base et la technique d'extrusion, on obtient:

- soit "des fibres de verre textiles", par extrusion et par étirage mécanique d'un boro-silicate d'alumine et de chaux pratiquement exempt d'alcali; la plus répandue de ces fibres, destinées à des applications textiles, étant dénommée "fibre E", de diamètre peu dispersé dont la moyenne est généralement comprise entre 10 et 15 micromètres;
- soit une "laine minérale", obtenue-par étirage, par soufflage et/ou par centrifugation interne ou externe;
  . soit d'un boro-silicate d'alumine et de chaux, riche en alcali (10 à 20 %), ce qui donne une "laine de verre",
  . soit d'un laitier ou d'un basalte comportant une proportion appréciable de fer, ce qui donne une "laine de roche";

ces laines minérales se présentant sous forme d'un enchevêtrement d'épaisseur appréciable de fibres élémentaires ondulées, dont les diamètres sont dispersés, mais dont la moyenne est généralement comprise entre trois et dix micromètres.

Avantageusement, en pratique:

- le ciment est un ciment portland artitificiel (CPA) et en ce que le rapport massique entre les pouzzolanes synthétiques kaoliniques et le ciment CPA est compris entre 0,25 et 4;
- les fibres de verre minérales non métalliques sensibles aux alcalis sont des fibres de verre E et la proportion en poids de ces fibres de verre E est compris entre 0,5 et 2,5 % du poids du total;
- les fibres de verre non métalliques sensibles aux alcalis sont des laines minérales choisies dans le groupe constitué par les laines de

roche et les laines de verre.

L'invention concerne également des procédés pour la fabrication d'un tel matériau composite constitué par un liant pouzzolanique de synthèse hydraté renforcé par des fibres de verre sensibles aux alcalis.

Dans une première forme de réalisation, adaptée aux fibres de verre textile E notamment, ce procédé consiste:

- tout d'abord, à calciner à une température comprise entre 650 et 850° des composés kaoliniques contenant au moins 40% en poids de kaolin, de manière à obtenir une pouzzolane de synthèse métakaolinique;
- ensuite, à mélanger ladite pouzzolane métakaolinique avec de l'eau et un ciment inorganique générant de la chaux, le rapport massique entre les pouzzolanes synthétiques kaoliniques et le ciment étant compris entre 0,25 et 4, et le rapport en poids entre l'eau et les autres matières solides (pouzzolanes et ciment) étant compris entre 0,3 et 0,6;
- ensuite, à renforcer ce mélange avec au plus 10 % de fibres de verre E;
- et enfin, à conformer ce mélange en un matériau composite.

En pratique, au mélange de pouzzolanes de synthèse et d'eau, on peut ajouter de la chaux, notamment de la chaux grasse.

Dans une variante, on mélange des pouzzolanes de synthèse et du ciment portland qui, sous l'effet de l'addition de l'eau, formera de la chaux, qui à son tour va hydrater les pouzzolanes pour les durcir. Cette réaction libère des hydrates, tels que par exemple la gehlénite hydratée et le silicate de calcium hydraté, puis la chaux disparait au fur et à mesure de la réaction ou de sa formation.

Dans une seconde forme de réalisation, adaptée aux laines minérales, ce procédé consiste:

- tout d'abord, à mélanger à sec des laines minérales, un composé générant de la chaux et des poudres de pouzzolanes de synthèse métakaoliniques obtenues par calcination à une température comprise entre 650 et 850° de composés kaoliniques contenant au moins 40 % en poids de kaolin;
- ensuite, à mouiller ce mélange avec de l'eau;
- et enfin, à conformer ce mélange en un matériau composite.

Dans une troisième forme de réalisation, également adaptée aux laines minérales, ce procédé consiste:

- tout d'abord, à mélange à sec des laines minérales, un composé générant de la chaux et des poudres de pouzzolanes de synthèse métakaoliniques obtenues par calcination à une température comprise entre 650 et 850° de composés kaoliniques contenant au moins 40 % en poids de kaolin;
- ensuite, à mouiller ce mélange avec de l'eau;
- et enfin, à conforme ce mélange en un matériau composite.

De manière surprenante, on a constaté que le défaut de chaux dans le mélange avec les pouzzolanes de synthèse kaoliniques améliore la résistance mécanique du matériau composite terminé.

Avec les laines minérales, on utilise avantageusement des pouzzolanes préparées à partir d'argiles particulièrement riches en kaolinite, c'est-à-dire ayant une teneur initiale supérieure à 90 % en kaolin. Ces pouzzolanes, constituées essentiellement de métakaolinite, présentent l'avantage d'être dans un état de desorganisation cristalline optimale, donc de présenter une réactivité optimale plus élevée.

En revanche, avec les fibres de verre E, on peut utiliser des pouzzolanes preparées à partir de latérites ou de sols tropicaux, c'est-à-dire de composés dont la teneur en kaolin est moins élevée, mais néanmoins substantielle.

Certes, il est connu depuis fort longtemps de mélanger des pouzzolanes naturelles ou artificielles et de la chaux. Mais, comme on le sait, la vitesse d'hydratation de ce mélange est très lente. De la sorte, de la chaux subsiste dans le mélange pendant des périodes très longues (un an et plus). Aussi, un renfort de chaux et de pouzzolanes naturelles ou artificielles par des fibres de verre nécessite l'emploi de fibres en zircone insensibles aux alcalis, sinon la chaux résiduelle corroderait les fibres de verre, de sorte que les performances mécaniques du matériau restent très insuffisantes. Aussi, rien ne permettrait d'en déduire que la combinaison de cette même chaux avec des pouzzolanes de synthèse kaoliniques permettrait d'adjoindre à ce mélange des fibres de verre sensibles aux alcalis, alors que justement, on savait que lors de l'addition de fibres de verre dans du ciment, la chaux de celui-ci corrodait ces fibres de verre. Ainsi, le procédé selon l'invention constitue-t-il une rupture intellectuelle par rapport aux enseignements traditionnels et permet surtout de passer de l'insuccès au succès en réduisant le coût.

La manière dont l'invention peut être réalisée et les avantages qui en découlent ressortiront mieux des exemples de réalisation donnés à titre indicatif et non limitatif.

### Exemple 1

De manière connue, on prépare une pouzzolane de synthèse kaolinique par calcination de kaolinite à 750° C pendant cinq heures.

On mélange trois parties de ce métakaolin à une partie de poids de chaux grasse sans caractère hydraulique A dix parties de ce mélange, on ajoute ensuite six parties d'eau.

Avec ce mélange, on confectionne des plaques parallélépipédiques de 50 x 25 x 1,3 centimètres que l'on soumet ensuite à une flexion centrée (distance entre appuis: 45 cm).

### Exemple 2

On répète l'exemple 1 en ajoutant au mélange 37,4 grammes de fibres de verre textile E multifilamentaires continues unidirectionnelles disposées dans le sens longitudinal (soit un rapport massique voisin de un pour cent.

La contrainte de rupture en traction par flexion de cette plaque, calculée suivant les hypothèses de l'élasticité linéaire, est de 18,8 MPa. En revanche, à titre de comparaison, la contrainte en traction pure de la même plaque sans fibre de verre (exemple 1) est seulement de 2,4 MPa.

### Exemple 3

On répète les exemples 1 et 2 avec du ciment Portland de classe CPA 55.

Le ciment non chargé en fibres de verre, présente une résistance à la traction de 6,9 MPa, alors que le matériau composite, c'est-à-dire chargé en fibres de verre, présente une résistance en traction par flexion de 15,2 MPa.

### Exemple 4

On répète les exemples 1 et 2 avec un mélange contenant une partie de ciment Portland CPA 55 et une partie de métakaolin. Le liant sans fibre présente une résistance en traction de 3,7 MPa, alors que le matériau composite avec fibres présente une résistance en traction par flexion de 16,8 MPa.

### Exemple 5

On répète les exemples 1 et 2 en remplaçant le métakaolin par une latérite calcinée et en modifiant la proportion de latérite par rapport à celle de la partie en poids de chaux. La résistance à la traction de ce liant est de 1,8 MPa et la résistance en traction par flexion de la plaque renforcée de fibres de verre est de 20 MPa.

Ces exemples illustent les progrès apportés par l'invention, notamment le fait que le métakaolin (exemple 3) consomme la chaux résiduelle du ciment Portland' CPA, puisque les flèches observées avant rupture entre les exemples 3 et 4 sont doublées.

**Exemple 6**

Par aspiration sous une pression de 0,7 bar, on imprègne à coeur une nappe en laine de verre au moyen d'une barbotine formée par une suspension aqueuse de pouzzolane de synthèse kaolinique selon l'exemple 1 et d'un mélange de chaux grasse, dont la viscosité est inférieure à 0,5 Pa.s$^{-1}$. Le produit obtenu comporte en poids autant de fibres de verre que de ciment.

On comprime ensuite légèrement ce mélange pour lui donner une conformation et diminuer son épaisseur.

On laisse réagir quelques jours pour assurer la prise du ciment en milieu humide et on élimine l'excès d'eau.

On obtient ainsi des plaques dont la résistance en traction par flexion de 6 MPa, la résistance en traction du liant sans fibre étant seulement de 2,3 MPa.

**Exemple 7**

On ouvre pneumatiquement de manière connue une nappe en laine de verre en vrac isolante ayant un poids de un kilo par mètre carré et une densité voisine de quinze kilos par mètre cube et des fibres de diamètre moyen de six microns.

On réalise ainsi des mèches ayant environ un centimètre de long, de sorte que la densité apparente des touffes est voisine de cinq kilos par mètre cube.

Par transport pneumatique, on introduit dans ces touffes un mélange pulvérulent homogène constitué pour moitié:

- de CPA 55,
- de métakaolin.

Le mélange pulvérulent représente en proportion 90 % en poids du mélange laine de verre + liant.

La laine de verre imprégnée de poudre est ensuite soumise à une pulvérisation par jet d'eau à température ambiante.

Le produit obtenu est ensuite comprimé. Il présente une résistance en traction par flexion de 10 MPa, alors que la résistance en traction pure du liant sans fibre est seulement de 3,7 MPa.

Ce matériau convient parfaitement pour la réalisation de revêtement de parois verticales, utilisable notamment comme matériau isolant (porte coupe-feu, isolant extérieur).

L'invention présente de nombreux avantages par rapport aux techniques connues à ce jour. On peut citer:

- la possibilité de réaliser des matrices minérales à faible coût et ce, dans d'excellentes conditions économiques et avec une faible consommation d'énergie;
- la possibilité de renforcer des ciments ou analogues par des fibres de verre bon marché, lesdites fibres de verre n'étant pas corrodées dans le temps par le ciment, ce que l'on ne savait faire jusqu'alors;
- la possibilité de réaliser des structures minérales, résistantes, telles que des panneaux de façade, des panneaux de couverture, voire des tuiles;
- la possibilité de mettre en place ce procédé sur place, sans faire appel à du matériel spécial et sans nécessiter des pouzzolanes naturelles et tout en faisant appel à des matières premières abondantes.

Les matériaux composites réalisés de la sorte peuvent être utilisés sous des formes diverses, notamment sous forme de panneaux porteurs (planches) ou isolants (panneaux verticaux) pour la construction de bâtiments, voire même dans les travaux publics, par exemple pour la fabrication de tuyaux de ciments armés, pour remplacer avantageusement les mélanges ciment/fibres d'amiante utilisés jusqu'alors.

**Revendications**

1. Matériau composite pour la construction, constituée par un mélange de ciment générant de la chaux et de pouzzolanes, renforcé par des fibres de verre,
    caractérisé
    en ce que le mélange comprend au plus dix pourcent (10 %) de fibres de verre minérales non-métalliques, sensibles aux alcalis;
- et en ce que les pouzzolanes sont des pouzzolanes de synthèse métakaoliniques hydratées, obtenues par calcination de composés kaoliniques contenant au moins 40 % en poids de kaolin, choisis dans le groupe constitué par les argiles, les latérites et les sols tropicaux.

2. Matériau composite selon la revendication 1, caractérisé en ce que le ciment est un ciment Portland artificiel (CPA) et en ce que le rapport massique entre les pouzzolanes synthétiques kaoliniques et le ciment CPA est compris entre 0,25 et 4.

3. Matériau composite selon la revendication 1, caractérisé en ce que les fibres de verre minérales non métalliques sensibles aux alcalis sont des fibres de verre E et la proportion en poids de ces fibres de verre E est compris entre 0,5 et 2,5 % du poids du total.

4. Matériau composite selon la revendication 1, caractérisé en ce que les fibres de verre non métalliques sensibles aux alcalis sont des laines minérales choisies dans le groupe constitué par les laines de roche et les laines de verre.

5. Procédé pour la fabrication d'un matériau composite pour la construction à base de ciment, de pouzzolanes et de fibres de verre selon l'une des revendications 1 à 3, caractérisé en ce qu'il consiste:

- tout d'abord, à calciner à une température comprise entre 650 et 850° des composés kaoliniques contenant au moins 40 % en poids de kaolin, de manière à obtenir une pouzzolane de synthèse métakaolinique;
- ensuite, à mélanger ladite pouzzolane métakaolinique avec de l'eau et un ciment inorganique générant de la chaux, le rapport massique entre les pouzzolanes synthétiques kaoliniques et le ciment étant compris entre 0,25 et 4, et le rapport en poids entre l'eau et les autres matières solides (pouzzolanes et ciment) étant compris entre 0,3 et 0,6;
- ensuite, à renforcer ce mélange avec au plus 10 % de fibres de verre E;
- et enfin, à conformer ce mélange en un matériau composite.

6. Procédé pour la fabrication d'un matériau composite pour la construction à base de ciment, de pouzzolane et de fibres de verre selon la revendication 4, caractérisé en ce qu'il consiste:

- tout d'abord, à mélanger à sec des laines minérales, un composé générant de la chaux et des poudres de pouzzolanes de synthèse métakaoliniques obtenues par calcination à une température comprise entre 650 et 850° de composés kaoliniques contenant au moins 40 % en poids de kaolin;
- ensuite, à mouiller ce mélange avec de l'eau;
- et enfin, à conformer ce mélanger en un matériau composite.

7. Procédé pour la fabrication d'un matériau composite pour la construction à base de ciment, de pouzzolane et de fibres de verre selon la revendication 4, caractérisé en ce qu'il consiste:

- tout d'abord, à conformer une laine minérale avec un liant organique;
- ensuite, à imprégner cet ensemble par une suspension a queue contenant une pouzzolane de synthèse métakaolinique et un composé minéral générant de la chaux;
- et enfin, à éliminer l'eau excédentaire.


**Patentansprüche**

1. Verbundwerkstoff für Baukonstruktionen, bestehend aus einer Mischung an wärmeerzeugendem Zement und an glasfaserverstärkten Puzzolanen, dadurch gekennzeichnet,

- daß die Mischung höchstens zehn Prozent (10 %) an nicht-metallischen, mineralischen, gegenüber Alkalien empfindliche Glasfasern enthält; und
- daß die Puzzolane wasserhaltige metakaolinhaltige, synthetische Puzzolane sind, die durch Calcinieren von kaolinhaltigen Verbindungen, ausgewählt aus der Gruppe bestehend aus Tonen, Lateriten und tropischen Erden erhalten werden, die zumindest 40 Gew.-% Kaolin enthalten.

2. Verbundwerkstoff nach Anspruch 1, dadurch gekennzeichnet, daß der Zement ein künstlicher Portland-Zement (CPA) ist, und daß das Massenverhältnis zwischen den kaolinhaltigen synthetischen Puzzolanen und dem Zement CPA zwischen 0,25 und 4 beträgt.

3. Verbundwerkstoff nach Anspruch 1, dadurch gekennzeichnet, daß die nicht-metallischen, gegenüber Alkalien empfindlichen, mineralischen Glasfasern Glasfasern E sind, und daß der Gewichtsanteil der Glasfasern E zwischen 0,5 und 2,5 % des Gesamtgewichtes ist.

4. Verbundwerkstoff nach Anspruch 1, dadurch gekennzeichnet, daß die nicht-metallischen, gegenüber Alkalien empfindlichen Glasfibern Mineralwollen, ausgewählt aus der Gruppe bestehend aus Steinwollen und Glaswollen, sind.

5. Verfahren zum Herstellen eines Verbundwerkstoffes für Baukonstruktionen auf Basis von Zement, Puzzolanen und Glasfasern nach einem der Ansprüche 1 bis 3, dadurch gekennzeichnet, daß

- zunächst kaolinhaltige Verbindungen, die zumindest 40 Gew.-% an Kaolin enthalten, bei einer Temperatur zwischen 650 und 850° calciniert werden, so daß ein metakaolinhaltiges synthetisches Puzzolan erhalten wird;
- daß anschließend das metakaolinhaltige Puzzolan mit Wasser und einem anorganischen Zement, der Wärme erzeugt, vermischt wird, wobei das Massenverhältnis zwischen den kaolinhaltigen synthetischen Puzzolanen und dem Zement zwischen 0,24 und 4 liegt, und wobei das Gewichtsverhältnis zwischen Wasser und den anderen festen Materialien (Puzzolanen und Zement) zwischen 0,3 und 0,6 liegt;
- daß nachfolgend die Mischung mit höchstens 10 % an Glasfasern E verstärkt wird; und
- daß schließlich die Mischung zu einem Verbundwerkstoff gestaltet wird.

6. Verfahren zum Herstellen eines Verbundwerkstoffs für Baukonstruktionen auf Basis von Zement, Puzzolanen und Glasfasern nach Anspruch 4, dadurch gekennzeichnet, daß

- zunächst Mineralwollen, eine Verbindung, die Wärme erzeugt, und Pulver aus metakaolinhaltigen synthetischen Puzzolanen, die durch Calcinieren von kaolinhaltigen Verbindungen, die zumindest 40 Gew.-% an Kaolin enthalten, bei einer Temperatur zwischen 650 und 850° erhalten werden, trocken vermischt werden;
- anschließend die Mischung mit Wasser angefeuchtet wird; und
- daß schließlich die Mischung zu einem Verbundwerkstoff gestaltet wird.

7. Verfahren zum Herstellen eines Verbundwerkstoffs für Baukonstruktionen auf Basis von Zement, Puzzolanen und Glasfasern nach Anspruch 4, dadurch gekennzeichnet,

- daß zunächst eine Mineralwolle mit einem organischen Bindemittel versehen wird;
- daß anschließend dieser Zusammenbau mit einer wässrige Suspension, die ein metakaolinhaltiges synthetisches Puzzolan und eine wärmeerzeugende mineralische Verbindung enthält, imprägniert wird; und
- daß schließlich das überschüssige Wasser entfernt wird.

## Claims

1. A composite construction material, comprising a mixture of cement which generates lime and pozzuolanas, reinforced with glass-fibers, <u>characterized</u> by the facts that:

. the mixture comprises less then 10 % of non-metallic inorganic non-alkali resistant glass-fibers;
. the pozzuolanas are synthetic hydrated metakaolinic pozzuolanas obtained by calcination from kaolinic compound containing at least 40 % by weight of kaolin, selected from the group consisting of clays, laterities and tropical soils.

2. The composite material according to claim 1, wherein the cement is artificial Portland cement (CPA), and wherein the mass ratio between the synthetic kaolinic pozzuolanas and the CPA cement is between 0.25 and 4.

3. The composite material according to claim 1, wherein the non-metallic inorganic non-alkali resistant glass-fibers are E glass-fibers, and wherein the percent by weight of said E glass-fibers is between 0.5 and 2.5 % of the total weight.

4. The composite material according to claim 1, wherein the non-metallic inorganic non-alkali resistant glass-fibers are inorganic wools selected from the group consisting of rock wools and glass wools.

5. A process for manufacturing a composite construction material consisting of cement, pozzuolanas and glass-fibers according to claims 1 to 3, characterized by consisting:

. first calcining at a temperature of between 650 and 850° C kaolinic compounds containing at least 40 % by weight of Kaolin, to obtain synthetic metakaolinic pozzuolanas;
. then, mixing said metakaolinic pozzuolanas with water and an inorganic compound generating lime to form a mixture, a mass ratio between the metakaolinic pozzuolanas and the limegenerating compound being between 0.25 and 4 and a weight ratio between the water and all solids being between 0.3 and 0.6;
. then, reinforcing said mixture with E glass-fibers;
. and finally, forming said mixture into a composite matrix material.

6. A process for manufacturing a composite construction material consisting of cement, pozzuolanas and glass-fibers according to claim 4, characterized by consisting:

. first, dry mixing inorganic wools, powdered synthetic metakaolinic pozzuolanas and a compound which generates lime to form a mixture, said metakaolinic compound being obtained from calcining at a temperature of between 650 and 850° C kaolinic compounds containing at least 40 % by weight of Kaolin;
. then, wetting said mixture with water;
. and finally, forming said mixture into a composite material.

7. A process for manufacturing a composite construction material consisting of cement, pozzuolanas and glass-fibers according to claim 4, characterized by consisting:

. first, shaping an inorganic wool comprising an inorganic binder;
. then, impregnating said bound wool with an aqueous suspension comprising synthetic metakaolinic powdered pozzuolanas and an inorganic compound generating lime;
. and finally, eliminating excess water.